# EUROPEAN PATENT APPLICATION

(11) **EP 3 402 161 A1**
(43) Date of publication of application: **14.11.2018**
(21) Application number: 16895812.2
(22) Date of filing: 28.03.2016
(51) Int. Cl.: H04L 29/08

(54) **METHOD AND DEVICE FOR DISTINGUISHING ACCESS NETWORK AND COMPUTER READABLE STORAGE MEDIUM**

(71) Applicant: Huawei Technologies Co., Ltd., Longgang District Shenzhen, Guangdong 518129 (CN)
(72) Inventor: ZHU, Hualin, Shenzhen Guangdong518129 (CN); LI, Huan, Shenzhen Guangdong 518129 (CN)
(74) Representative: Epping - Hermann - Fischer
(86) International application number: PCT/CN2016/077564
(87) International publication number: WO 2017/166031

(57) **Abstract**

The present invention discloses a method and an apparatus for distinguishing an access network, and a computer readable storage medium, and relates to the field of communications technologies. The present invention is intended to resolve a problem in the prior art that data transmitted by using a plurality of access networks is converged in a core network device, but the core network device cannot obtain a data transmission status of an access network side in real time. The method is applied to a multi-access network architecture. In the multi-access network architecture, user equipment accesses a base station by using at least a first access network and a second access network. The method includes: sending, by the base station, a data feature set to a core network device after transmission of user plane data begins, where the data feature set includes an access network identifier corresponding to the user plane data and attribute information of the user plane data. The present invention is applied to a process in which the user equipment transmits data with the core network device by using a plurality of access networks.

## Description

### TECHNICAL FIELD

The present invention relates to the field of communications technologies, and in particular, to a method and an apparatus for distinguishing an access network, and a computer readable storage medium.

### BACKGROUND

Currently, user equipment (User Equipment, UE) may access a network by using a plurality of access networks.

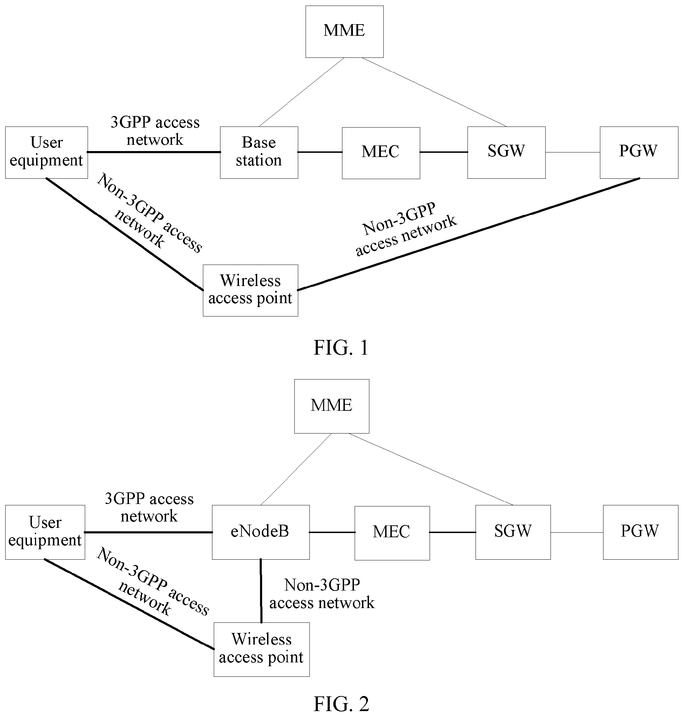

As shown in FIG. 1, FIG. 1 is a schematic diagram of a multi-access network architecture used in a Long Term Evolution (Long Term Evolution, LTE) network in the prior art. The network architecture shows that UE may access a network by simultaneously using two types of accesses networks: a 3rd Generation Partnership Project (3rd Generation Partnership Project, 3GPP) access network and a non-3GPP access network. An access point corresponding to the 3GPP access network is an evolved NodeB (evolved Node B, eNodeB), and an access point corresponding to the non-3GPP access network is a wireless access point. Data transmitted by using the two types of access networks is converged in a packet data network gateway (Packet Data Network Gateway, PGW) of a core network side. In addition, FIG. 1 also shows core network side devices, such as a mobility management entity (Mobility Management Entity, MME), a serving gateway (Serving Gateway, SGW), a PGW, and a Mobile Edge Computing (Mobile-Edge Computing, MEC).

Through researches, it is found that a problem in the prior art is that, a convergent point of data transmitted by using a plurality of access networks is a core network device, for example, a PGW or an MEC on a core network side, but the core network device cannot obtain a data transmission status of an access network side in real time. Consequently, the core network device cannot flexibly adjust the access networks configured to transmit the data.

### SUMMARY

The present invention provides a method and an apparatus for distinguishing an access network, to resolve the problem in the prior art that data transmitted by using a plurality of access networks is converged in a core network device, but the core network device cannot obtain a data transmission status of an access network side in real time.

To achieve the foregoing objective, the following technical solutions are used in the present invention:
According to a first aspect, the present invention provides a method for distinguishing an access network. The method is applied to a multi-access network architecture. In the multi-access network architecture, user equipment accesses a base station by using at least a first access network and a second access network. The method includes: sending, by the base station, a data feature set to a core network device after transmission of user plane data begins, and the data feature set includes an access network identifier corresponding to the user plane data and attribute information of the user plane data.

The method for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, after transmission of the user plane data begins, the base station sends the data feature set to the core network device. The data feature set carries the access network identifier corresponding to the user plane data and the attribute information of the user plane data. In this case, the core network device can determine, based on the data feature set, an access network used to transmit the user plane data, thereby being capable of distinguishing different access networks. In conclusion, based on the method for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

With reference to the first aspect, in a first implementation of the first aspect, the sending, by the base station, a data feature set to a core network device specifically includes: sending, by the base station, a user plane data packet to the core network device, where the user plane data packet carries the data feature set. The implementation provides an implementation of sending the data feature set. In this implementation, the data feature set may be carried in the user plane data packet.

With reference to the first aspect, in a second implementation of the first aspect, the sending, by the base station, a data feature set to a core network device specifically includes: sending, by the base station, control plane signaling to the core network device, where the control plane signaling carries the data feature set. The implementation provides another implementation of sending the data feature set. In this implementation, the data feature set may be carried in the control plane signaling.

With reference to any one of the first aspect, or the first or the second implementation of the first aspect, in a third implementation of the first aspect, the attribute information of the user plane data includes any one or more of 5-tuple information of the user plane data, a data volume of the user plane data, and a bearer identifier corresponding to the user plane data. This implementation provides a quantity of possible implementations of the attribute information of the user plane data that is carried in the data feature set.

According to a second aspect, the present invention provides a method for distinguishing an access network. The method is applied to a multi-access network architecture. In the multi-access network architecture, user equipment accesses a base station by using at least a first access network and a second access network. The method includes: receiving, by a core network device, a data feature set sent by the base station, where the data feature set includes an access network identifier corresponding to transmitted user plane data and attribute information of the user plane data; and determining, based on the access network identifier corresponding to the user plane data and the attribute information of the user plane data in the data feature set, an access network used to transmit the user plane data.

The method for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, the core network device can determine, based on the access network identifier and the attribute information of the user plane data carried in the data feature set, the access network used to transmit the user plane data, thereby being capable of distinguishing different access networks. In conclusion, based on the method for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

With reference to the second aspect, in a first implementation of the second aspect, the core network device is a gateway or a mobile edge computing device MEC.

According to a third aspect, the present invention provides a method for distinguishing an access network. The method is applied to a multi-access network architecture. In the multi-access network architecture, user equipment accesses a base station by using at least a first access network and a second access network. The method includes: sending, by the base station, a data feature set to a core network device before user plane data is transmitted, where the data feature set includes a routing rule of the to-be-transmitted user plane data, and the routing rule includes an identifier of each access network and user plane data attribute information corresponding to the access network.

The method for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, before the user plane data is transmitted, the base station first sends the data feature set to the core network device. The data feature set carries the routing rule of the user plane data. In this case, when receiving the user plane data, the core network device can determine, based on the routing rule in the data feature set, an access network used to transmit the user plane data, thereby being capable of distinguishing different access networks. In conclusion, based on the method for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

With reference to the third aspect, in a first implementation of the third aspect, the sending, by the base station, a data feature set to a core network device specifically includes: sending, by the base station, control plane signaling to the core network device, where the control plane signaling carries the data feature set.

With reference to the third aspect or the first implementation of the third aspect, in a second implementation of the third aspect, if the routing rule is updated, the base station sends data feature set to the core network device, where the data feature set includes the updated routing rule.

With reference to any one of the third aspect, or the first or the second implementation of the third aspect, in a third implementation of the third aspect, the user plane data attribute information includes any one or more of 5-tuple information and bearer information of the user plane data.

According to a fourth aspect, the present invention provides a method for distinguishing an access network. The method is applied to a multi-access network architecture. In the multi-access network architecture, user equipment accesses a base station by using at least a first access network and a second access network. The method includes: receiving, by a core network device, a data feature set sent by the base station, where the data feature set includes a routing rule of to-be-transmitted user plane data, and the routing rule includes an identifier of each access network and user plane data attribute information corresponding to the access network; and when receiving the user plane data sent by the base station, determining, based on the data feature set, an access network used to transmit the user plane data.

The method for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby performing adjustment in real time based on the data transmission status of the access network side. In addition, under the network architecture, when receiving user plane data from the user equipment, the core network device can determine, based on the routing rule carried in the received data feature set, the access network used to transmit the user plane data, thereby being capable of distinguishing different access networks. In conclusion, based on the method for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

With reference to the fourth aspect, in a first implementation of the fourth aspect, the core network device is a gateway or a mobile edge computing device MEC.

According to a fifth aspect, the present invention provides an apparatus for distinguishing an access network. The apparatus is applied to a base station, and the base station is applied to a multi-access network architecture. In the multi-access network architecture, user equipment accesses the base station by using at least a first access network and a second access network. The apparatus includes: a memory, configured to store computer executable program code; a transceiver, and a processor coupled to the memory and the transceiver. The transceiver is configured to forward user plane data sent by the user equipment to a core network device. The transceiver is further configured to send a data feature set to the core network device after transmission of the user plane data begins. The data feature set includes an access network identifier corresponding to the user plane data and attribute information of the user plane data.

The apparatus for distinguishing an access network provided in the present invention is applied to the base station, and the base station is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, after transmission of the user plane data begins, the base station sends the data feature set to the core network device. The data feature set carries the access network identifier corresponding to the user plane data and the attribute information of the user plane data. In this case, the core network device can determine, based on the data feature set, an access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

With reference to the fifth aspect, in a first implementation of the fifth aspect, the transceiver is specifically configured to send a user plane data packet to the core network device. The user plane data packet carries the data feature set.

With reference to the fifth aspect, in a second implementation of the fifth aspect, the transceiver is specifically configured to send control plane signaling to the core network device. The control plane signaling carries the data feature set.

With reference to any one of the fifth aspect, or the first or the second implementation of the fifth aspect, in a third implementation of the fifth aspect, the attribute information of the user plane data includes any one or more of 5-tuple information of the user plane data, a data volume of the user plane data, and a bearer identifier corresponding to the user plane data.

According to a sixth aspect, the present invention provides an apparatus for distinguishing an access network. The apparatus is applied to a core network device, and the core network device is applied to a multi-access network architecture. In the multi-access network architecture, user equipment accesses a base station by using at least a first access network and a second access network. The apparatus includes: a memory, configured to store computer executable program code; a transceiver, and a processor coupled to the memory and the transceiver. The transceiver is configured to receive a data feature set sent by the base station. The data feature set includes an access network identifier corresponding to transmitted user plane data and attribute information of the user plane data. The processor is configured to determine, based on the access network identifier corresponding to the user plane data and the attribute information of the user plane data in the data feature set, an access network used to transmit the user plane data.

The apparatus for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, the core network device can determine, based on the access network identifier and the attribute information of the user plane data carried in the data feature set, the access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

With reference to the sixth aspect, in a first implementation of the sixth aspect, the core network device is a gateway or a mobile edge computing device MEC.

According to a seventh aspect, the present invention provides an apparatus for distinguishing an access network. The apparatus is applied to a base station, and the base station is applied to a multi-access network architecture. In the multi-access network architecture, user equipment accesses the base station by using at least a first access network and a second access network. The apparatus includes: a memory, configured to store computer executable program code; a transceiver, and a processor coupled to the memory and the transceiver. The transceiver is configured to send a data feature set to a core network device before user plane data is transmitted. The data feature set includes a routing rule of the to-be-transmitted user plane data, and the routing rule includes an identifier of each access network and user plane data attribute information corresponding to the access network.

The apparatus for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, before the user plane data is transmitted, the base station first sends the data feature set to the core network device. The data feature set carries the routing rule of the user plane data. In this case, when receiving the user plane data, the core network device can determine, based on the routing rule in the data feature set, an access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

With reference to the seventh aspect, in a first implementation of the seventh aspect, the transceiver is specifically configured to send control plane signaling to the core network device. The control plane signaling carries the data feature set.

With reference to any one of the seventh aspect, or the first or a second implementation of the seventh aspect, in the second implementation of the seventh aspect, the transceiver is further configured to send a data feature set to the core network device when the routing rule is updated. The data feature set includes the updated routing rule.

With reference to any one of the seventh aspect, or the first or the second implementation of the seventh aspect, in a third implementation of the seventh aspect, the user plane data attribute information includes any one or more of 5-tuple information and bearer information of the user plane data.

According to an eighth aspect, the present invention provides an apparatus for distinguishing an access network. The apparatus is applied to a core network device, and the core network device is applied to a multi-access network architecture. In the multi-access network architecture, user equipment accesses a base station by using at least a first access network and a second access network. The apparatus includes: a memory, configured to store computer executable program code; a transceiver, and a processor coupled to the memory and the transceiver. The transceiver is configured to receive a data feature set sent by the base station. The data feature set includes a routing rule of to-be-transmitted user plane data, and the routing rule includes an identifier of each access network and user plane data attribute information corresponding to the access network. The transceiver is further configured to receive user plane data sent by the base station. The processor is configured to: when receiving the user plane data sent by the base station, determine, based on the data feature set, an access network used to transmit the user plane data.

The apparatus for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby performing adjustment in real time based on the data transmission status of the access network side. In addition, under the network architecture, when receiving user plane data from the user equipment, the core network device can determine, based on the routing rule carried in the received data feature set, the access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

With reference to the eighth aspect, in a first implementation of the eighth aspect, the core network device is a gateway or a mobile edge computing device MEC.

According to a ninth aspect, the present invention provides an apparatus for distinguishing an access network. The apparatus is applied to a base station, and the base station is applied to a multi-access network architecture. In the multi-access network architecture, user equipment accesses the base station by using at least a first access network and a second access network. The apparatus includes: a receiving unit, configured to receive user plane data sent by the user equipment; and a sending unit, configured to send the user plane data to a core network device. The sending unit is further configured to send a data feature set to the core network device after transmission of the user plane data begins. The data feature set includes an access network identifier corresponding to the user plane data and attribute information of the user plane data.

The apparatus for distinguishing an access network provided in the present invention is applied to the base station, and the base station is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, after transmission of the user plane data begins, the base station sends the data feature set to the core network device. The data feature set carries the access network identifier corresponding to the user plane data and the attribute information of the user plane data. In this case, the core network device can determine, based on the data feature set, an access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

With reference to the ninth aspect, in a first implementation of the ninth aspect, the sending unit is specifically configured to send a user plane data packet to the core network device. The user plane data packet carries the data feature set.

With reference to the ninth aspect, in a second implementation of the ninth aspect, the sending unit is specifically configured to send control plane signaling to the core network device. The control plane signaling carries the data feature set.

With reference to any one of the ninth aspect, or the first or the second implementation of the ninth aspect, in a third implementation of the ninth aspect, the attribute information of the user plane data includes any one or more of 5-tuple information of the user plane data, a data volume of the user plane data, and a bearer identifier corresponding to the user plane data.

According to a tenth aspect, the present invention provides an apparatus for distinguishing an access network. The apparatus is applied to a core network device, and the core network device is applied to a multi-access network architecture. In the multi-access network architecture, user equipment accesses a base station by using at least a first access network and a second access network. The apparatus includes: a receiving unit, configured to receive a data feature set sent by the base station, where the data feature set includes an access network identifier corresponding to transmitted user plane data and attribute information of the user plane data; and a processing unit, configured to determine, based on the access network identifier corresponding to the user plane data and the attribute information of the user plane data in the data feature set, an access network used to transmit the user plane data.

The apparatus for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, the core network device can determine, based on the access network identifier and the attribute information of the user plane data carried in the data feature set, the access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

With reference to the tenth aspect, in a first implementation of the tenth aspect, the core network device is a gateway or a mobile edge computing device MEC.

According to an eleventh aspect, the present invention provides an apparatus for distinguishing an access network. The apparatus is applied to a base station, and the base station is applied to a multi-access network architecture. In the multi-access network architecture, user equipment accesses the base station by using at least a first access network and a second access network. The apparatus includes: a sending unit, configured to send a data feature set to a core network device before user plane data is transmitted. The data feature set includes a routing rule of the to-be-transmitted user plane data, and the routing rule includes an identifier of each access network and user plane data attribute information corresponding to the access network.

The apparatus for distinguishing an access network provided in the present invention is applied to the base station, and the base station is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, after transmission of the user plane data begins, the base station sends the data feature set to the core network device. The data feature set carries the access network identifier corresponding to the user plane data and the attribute information of the user plane data. In this case, the core network device can determine, based on the data feature set, an access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

With reference to the eleventh aspect, in a first implementation of the eleventh aspect, the sending unit is specifically configured to send control plane signaling to the core network device. The control plane signaling carries the data feature set.

With reference to the eleventh aspect or the first implementation of the eleventh aspect, in a second implementation of the eleventh aspect, the sending unit is further configured to send a data feature set to the core network device when the routing rule is updated. The data feature set includes the updated routing rule.

With reference to any one of the eleventh aspect, or the first or the second implementation of the eleventh aspect, in a third implementation of the eleventh aspect, the user plane data attribute information includes any one or more of 5-tuple information and bearer information of the user plane data.

According to a twelfth aspect, the present invention provides an apparatus for distinguishing an access network. The apparatus is applied to a core network device, and the core network device is applied to a multi-access network architecture. In the multi-access network architecture, user equipment accesses a base station by using at least a first access network and a second access network. The apparatus includes: a receiving unit, configured to receive a data feature set sent by the base station, where the data feature set includes a routing rule of to-be-transmitted user plane data, and the routing rule includes an identifier of each access network and user plane data attribute information corresponding to the access network; and a processing unit, configured to: when receiving user plane data sent by the base station, determine, based on the data feature set, an access network used to transmit the user plane data.

With reference to the twelfth aspect, in a first implementation of the twelfth aspect, the core network device is a gateway or a mobile edge computing device MEC.

The apparatus for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby performing adjustment in real time based on the data transmission status of the access network side. In addition, under the network architecture, when receiving user plane data from the user equipment, the core network device can determine, based on the routing rule carried in the received data feature set, the access network used to transmit the user plane data, thereby being capable of distinguishing different access networks. In conclusion, based on the method for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

According to a thirteenth aspect, the present invention provides a nonvolatile computer readable storage medium storing one or more programs. The one or more programs include an instruction. When the instruction is executed by a base station, the base station is caused to perform the following event: sending, by the base station, a data feature set to a core network device after transmission of user plane data begins. The data feature set includes an access network identifier corresponding to the user plane data and attribute information of the user plane data.

According to a fourteenth aspect, the present invention provides a nonvolatile computer readable storage medium storing one or more programs. The one or more programs include an instruction. When the instruction is executed by a core network device, the core network device is caused to perform the following events: receiving, by the core network device, a data feature set sent by a base station, where the data feature set includes an access network identifier corresponding to transmitted user plane data and attribute information of the user plane data; and determining, based on the access network identifier corresponding to the user plane data and the attribute information of the user plane data in the data feature set, an access network used to transmit the user plane data.

According to a fifteenth aspect, the present invention provides a nonvolatile computer readable storage medium storing one or more programs. The one or more programs include an instruction. When the instruction is executed by a base station, the base station is caused to perform the following event: sending, by the base station, a data feature set to a core network device before user plane data is transmitted. The data feature set includes a routing rule of the to-be-transmitted user plane data, and the routing rule includes an identifier of each access network and user plane data attribute information corresponding to the access network.

According to a sixteenth aspect, the present invention provides a nonvolatile computer readable storage medium storing one or more programs. The one or more programs include an instruction. When the instruction is executed by a core network device, the core network device is caused to perform the following events: receiving, by the core network device, a data feature set sent by a base station, where the data feature set includes a routing rule of to-be-transmitted user plane data, and the routing rule includes an identifier of each access network and user plane data attribute information corresponding to the access network; and when receiving user plane data sent by the base station, determining, based on the data feature set, an access network used to transmit the user plane data.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a wireless network multi-access architecture provided in the prior art;
FIG. 2 is a schematic diagram of a wireless network multi-access architecture according to an embodiment of the present invention;
FIG. 3 is a schematic flowchart of a first method for distinguishing an access network according to an embodiment of the present invention;
FIG. 4 is a schematic flowchart of a second method for distinguishing an access network according to an embodiment of the present invention;
FIG. 5 is a schematic flowchart of a third method for distinguishing an access network according to an embodiment of the present invention;
FIG. 6 is a schematic flowchart of a fourth method for distinguishing an access network according to an embodiment of the present invention;
FIG. 7 is a schematic flowchart of a fifth method for distinguishing an access network according to an embodiment of the present invention;
FIG. 8 is a schematic structural diagram of a first apparatus for distinguishing an access network according to an embodiment of the present invention;
FIG. 9 is a schematic structural diagram of a second apparatus for distinguishing an access network according to an embodiment of the present invention;
FIG. 10 is a schematic structural diagram of a third apparatus for distinguishing an access network according to an embodiment of the present invention;
FIG. 11 is a schematic structural diagram of a fourth apparatus for distinguishing an access network according to an embodiment of the present invention;
FIG. 12 is a schematic structural diagram of a fifth apparatus for distinguishing an access network according to an embodiment of the present invention;
FIG. 13 is a schematic structural diagram of a sixth apparatus for distinguishing an access network according to an embodiment of the present invention;
FIG. 14 is a schematic structural diagram of a seventh apparatus for distinguishing an access network according to an embodiment of the present invention; and
FIG. 15 is a schematic structural diagram of an eighth apparatus for distinguishing an access network according to an embodiment of the present invention.

### DESCRIPTION OF EMBODIMENTS

The following clearly describes the technical solutions in the embodiments with reference to the accompanying drawings in the embodiments. Apparently, the described embodiments are merely some but not all of the embodiments of the present invention. All other embodiments obtained by a person of ordinary skill in the art based on the embodiments of the present invention without creative efforts shall fall within the protection scope of the present invention.

A method for distinguishing an access network provided in the embodiments of the present invention is applied to a multi-access network architecture. In the multi-access network architecture, user equipment accesses a base station by using at least a first access network and a second access network.

User equipment UE in this application may include a handheld device, an in-vehicle device, a wearable device, or a computing device that provides a radio communication function; another processing device connected to a wireless modem; or user equipment (User Equipment, UE) in various forms, including a mobile station (Mobile station, MS), a terminal (terminal), terminal equipment (Terminal Equipment), a software terminal, and the like. For ease of description, in this application, the devices mentioned above are all referred to as user equipment or UE.

The multi-access network architecture in the embodiments of the present invention is a network architecture in which user equipment can access a network by using a plurality of access networks. Moreover, in the network architecture, an access point at which the user equipment accesses the network by using different access networks is a base station, so that the base station can obtain a data transmission status of an access network side, thereby adjusting, in real time based on the data transmission status of the access network side, an access network used to transmit data.

A first access network and a second access network in the embodiments of the present invention are any two different access networks. In addition to the first access network and the second access network, the user equipment may access the network by using another access network, for example, a third access network and a fourth access network. Moreover, "first", "second", "third", and the like in the embodiments of the present invention are only used to distinguish different access networks, but are neither used to indicate a particular access network, nor used to limit a sequence of the different access networks. The network in the embodiments of the present invention may be a wireless network, for example, a general packet radio service (General Packet Radio Service, GPRS) network, 3G network, an LTE network, or a 5G network. Therefore, the multi-access network architecture in the embodiments of the present invention may be applied to any mobile network.

As shown in FIG. 2, FIG. 2 is a schematic diagram of a multi-access network architecture applied to an LTE network according to an embodiment of the present invention. In the network architecture, user equipment accesses a network by separately using two access networks of non-3GPP and 3GPP. Moreover, different from a network architecture shown in FIG. 1, in the network architecture, a convergent point of the two access networks is an eNodeB, so that the eNodeB can obtain a data transmission status of an access network side in real time, and adjust, based on the data transmission status of the access network side, an access network used to transmit data. In addition, core network side devices such as an MME, an SGW, a PGW, and an MEC are also shown in FIG. 2. Refer to the prior art for interaction between the core network side devices, and details are not described in the embodiments of the present invention.

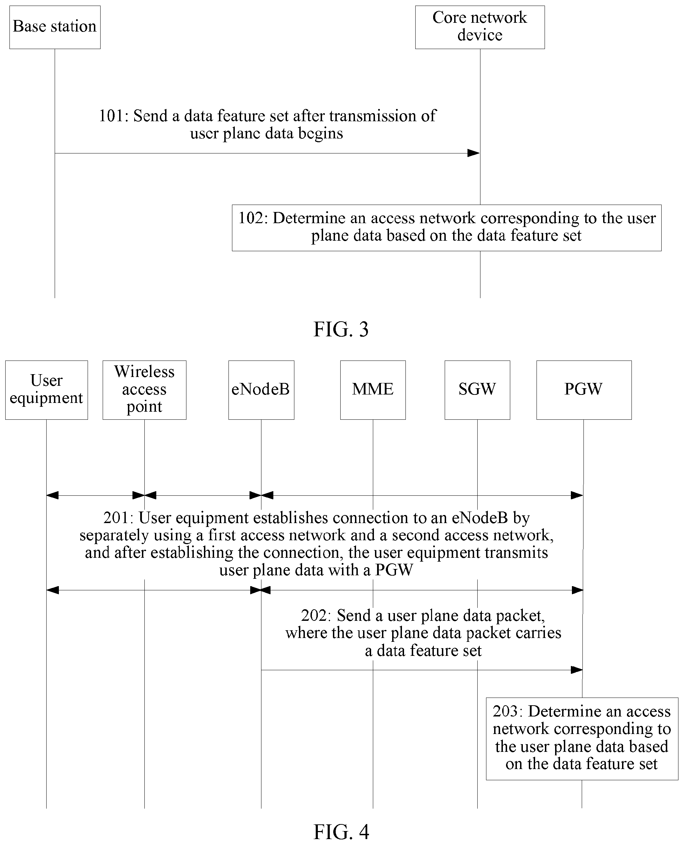

As shown in FIG. 3, an embodiment of the present invention provides a method for distinguishing an access network, applied to the multi-access network architecture in the embodiments of the present invention. The method includes the following steps.

101: A base station sends a data feature set to a core network device after transmission of user plane data begins.

The data feature set includes an access network identifier corresponding to the user plane data and attribute information of the user plane data. The attribute information of the user plane data includes at least one or more of 5-tuple information of the user plane data, a data volume of the user plane data, and a bearer identifier corresponding to the user plane data. More specifically, the 5-tuple information of the user plane data includes a source address, a destination address, a source port number, a destination port number, and a transfer protocol. If the user plane data is sliced and then is sent in a data transmission process, the attribute information of the user plane data may further include the 5-tuple information of the user plane data and an identifier of each slice. The data volume of the user plane data is a data volume that is obtained after the base station performs statistics on the sent user plane data.

The core network device in the present invention is mainly a core network device related to traffic monitor and traffic-based charging, for example, a gateway and an MEC, and more specifically, for example, a PGW or an MEC in an LTE network.

The after transmission of user plane data begins in this step means that user equipment has been transmitted the user plane data with the core network device. After transmission of the user plane data begins, when receiving the user plane data sent by the user equipment, the base station can distinguish an access network by analyzing the user plane data and an access point for transmitting the data. For example, if the data is transmitted by using an access network whose access point is the base station, the base station determines that the access network is a 3GPP access network; if the data is transmitted by using an access network whose access point is a wireless access point, the base station determines that the access network is a non-3GPP access network. In this way, after the user plane data is sent, the base station packets an identifier of the access network and some information of the user plane data into the data feature set and then sends the data feature set to the core network device. That is, the base station distinguishes access networks from which different user plane data is from, and then directly sends a distinguishing result to the core network device.

Optionally, the base station may intermittently send the data feature set to the core network device. Moreover, that the base station sends the data feature set to the core network device does not necessarily mean that the base station directly sends the data feature set to the core network device. In this process, the data feature set may also be forwarded by another device.

In a possible implementation of this step, the base station sends the data feature set to the core network device by using a user plane data packet carrying the data feature set. In another possible implementation of this step, the base station sends the data feature set to the core network device by using control plane signaling carrying the data feature set.

102: The core network device receives the data feature set sent by the base station, and determines, based on an access network identifier corresponding to the user plane data and attribute information of the user plane data in the data feature set, an access network used to transmit the user plane data.

The core network device can distinguish, based on information carried in the data feature set, different access networks used to transmit the user plane data, and then uses a distinguishing result for traffic-based charging and the like.

To clearly describe the method provided in this embodiment of the present invention, for example, the data feature set includes an access network identifier 1, and 5-tuple information 1 of the user plane data. The 5-tuple information 1 may specifically include a source address 10.1.1.1, a destination address 40.1.1.1, a source port number 100, a destination port number 200, and a transmission control protocol TCP. In this case, after receiving the data feature set, the core network device may conclude that all data flows meeting the 5-tuple information are information transmitted by using an access network indicated by the access network identifier 1, and then determines that all the data flows meeting the 5-tuple information are data flows transmitted by using the access network corresponding to the access network identifier 1.

In this embodiment, the base station distinguishes different access networks used to transmit the user plane data, and then informs the core network device of a distinguishing result. Directly based on the distinguishing result, the core network device may learn of a specific access network through which the user plane data is transmitted.

The method for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. Under the network architecture, after transmission of the user plane data begins, the base station sends the data feature set to the core network device. The data feature set carries the access network identifier corresponding to the user plane data and the attribute information of the user plane data. In this case, the core network device can determine, based on the data feature set, an access network used to transmit the user plane data, thereby distinguishing different access networks. In conclusion, based on the method for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

During actual application, the base station may send the data feature set to the core network device by sending a user plane data packet, or may send the data feature set to the core network device by sending control plane signaling. With reference to an actual application scenario, specific embodiments of the two possible implementations are described below.

As shown in FIG. 4, in combination with an LTE network, for example, a base station is an eNodeB, a core network device is a PGW, and user equipment accesses a network by using two access networks. An embodiment of the present invention provides a method for distinguishing the access network, specifically including the following steps.

201: The user equipment establishes connection to the eNodeB by separately using a first access network and a second access network, and after establishing the connection, the user equipment transmits user plane data with the PGW.

Refer to the prior art for a specific implementation process of this step, and details are not described herein.

202: The eNodeB sends a user plane data packet to the PGW, where the user plane data packet carries a data feature set.

The user plane data packet in this step may be an uplink data packet sent by the user equipment to the PGW by using the eNodeB, or may be a user plane data packet that is proactively sent by the eNodeB to the PGW and that is independent of the user plane data sent by the user equipment.

Refer to step 101 for a specific implementation form of the data feature set in this step, and details are not described herein.

203: The PGW receives the user plane data packet sent by the eNodeB, and determines, based on the data feature set carried in the user plane data packet, an access network used to transmit the user plane data.

Refer to step 102 for a specific implementation process of this step, and details are not described herein.

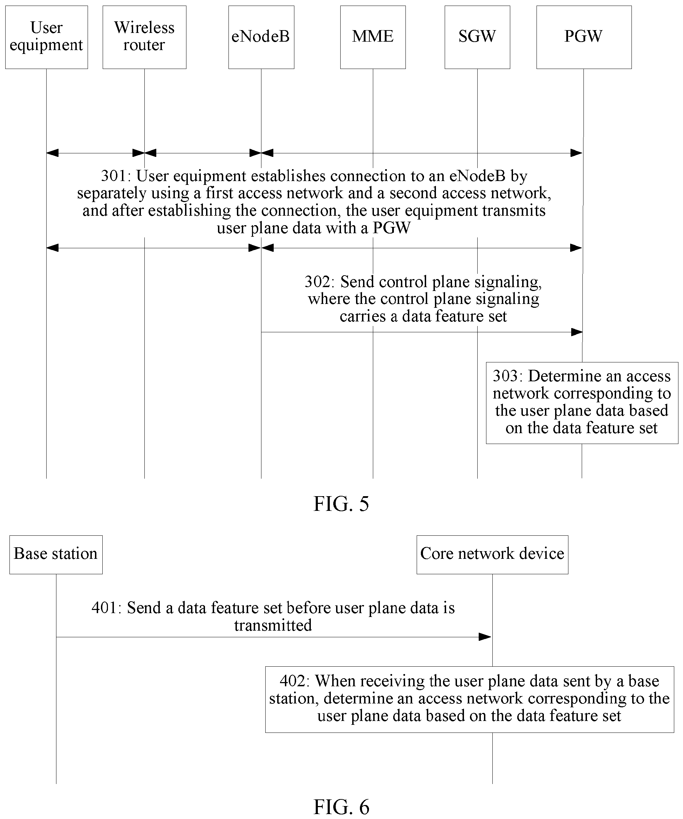

As shown in FIG. 5, in combination with an LTE network, for example, a base station is an eNodeB, a core network device is a gateway PGW, and user equipment accesses a network by using two access networks. An embodiment of the present invention provides another method for distinguishing an access network, specifically including the following steps.

301: The user equipment establishes connection to the eNodeB by separately using a first access network and a second access network, and after establishing the connection, the user equipment transmits user plane data with the PGW.

Refer to the prior art for a specific implementation process of this step, and details are not described herein.

302: The eNodeB sends control plane signaling to the PGW, where the control plane signaling carries a data feature set.

In a specific implementation process of this step, the base station sends the control plane signaling carrying the data feature set to an MME, and then the MME forwards the control plane signaling to the PGW.

Refer to step 101 for a specific implementation form of the data feature set in this step, and details are not described herein.

303: The PGW receives the control plane signaling sent by the eNodeB, and determines, based on the data feature set carried in the control plane signaling, an access network used to transmit the user plane data.

Refer to step 102 for a specific implementation process of this step, and details are not described herein.

As shown in FIG. 6, an embodiment of the present invention further provides a method for distinguishing an access network, also applied to the multi-access network architecture in the embodiments of the present invention. The method includes the following steps.

401: Abase station sends a data feature set to a core network device before user plane data is transmitted.

The data feature set includes a routing rule of the to-be-transmitted user plane data, and the routing rule includes an identifier of each access network and user plane data attribute information corresponding to the access network. The user plane data attribute information includes any one or more of 5-tuple information and bearer information of the user plane data.

The routing rule may be updated after the user plane data is transmitted. To be specific, the base station may send a new data feature set to the core network device. The new data feature set includes the updated routing rule. After receiving the updated routing rule, the core network device uses the new routing rule to determine an access network for transmitting user data.

402: The core network device receives the data feature set sent by the base station, and when receiving the user plane data sent by the base station, determines, based on the data feature set, an access network used to transmit the user plane data.

For example, the routing rule is that an access network identifier 1 corresponds to a 5-tuple 1 of the user plane data, and an access network identifier 2 corresponds to a 5-tuple 2 of the user plane data. After receiving the user plane data, the core network device may perform distinguishing based on the 5-tuple information and the routing rule of the user plane data: When a 5-tuple of the user plane data is the 5-tuple 1, the access network used to transmit the user plane data is an access network indicated by the access network identifier 1; When a 5-tuple of the user plane data is the 5-tuple 2, the access network used to transmit the user plane data is an access network indicated by the access network identifier 2.

In this embodiment, the base station sends the routing rule to the core network device before transmitting a user plane data packet sent by the user equipment instead of distinguishing the access network used to transmit the user plane data. In this way, after receiving the user plane data, the core network device can determine, based on the routing rule, the access network used to transmit the user plane data.

The method for distinguishing an access network provided in this embodiment of the present invention is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. Under the network architecture, before the user plane data is transmitted, the base station first sends the data feature set to the core network device. The data feature set carries the routing rule of the user plane data. In this case, when receiving the user plane data, the core network device can determine, based on the routing rule in the data feature set, an access network used to transmit the user plane data, thereby being capable of distinguishing different access networks. In conclusion, based on the method for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

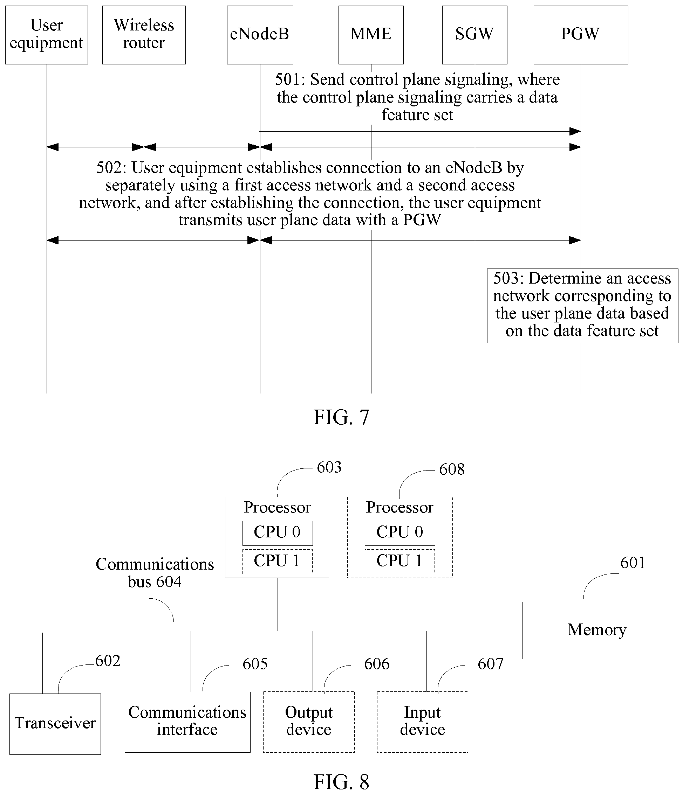

As shown in FIG. 7, in combination with an LTE network, for example, a base station is an eNodeB, a core network device is a PGW, and user equipment accesses a network by using two access networks. An embodiment of the present invention further provides a method for distinguishing an access network, specifically including the following steps.

501: Before user plane data is transmitted, the eNodeB sends control plane signaling to the PGW, where the control plane signaling carries a data feature set.

Refer to step 401 for a specific implementation process of this step, and details are not described herein.

502: The user equipment establishes connection to the eNodeB by separately using a first access network and a second access network, and after establishing the connection, the user equipment transmits the user plane data with the PGW.

503: When receiving the user plane data sent by the eNodeB, the PGW determines, based on the data feature set, an access network used to transmit the user plane data.

Refer to step 402 for a specific implementation process of this step, and details are not described herein.

As shown in FIG. 8, an embodiment of the present invention provides an apparatus for distinguishing an access network. The apparatus is applied to a base station, and the base station is applied to a multi-access network architecture. In the multi-access network architecture, user equipment accesses the base station by using at least a first access network and a second access network. The apparatus includes a memory 601, a transceiver 602, a processor 603, a communications bus 604, and at least one communications interface 605. The memory 601, the transceiver 602, the processor 603, and the at least one communications interface 605 are connected to each other by using the communications bus 604.

The transceiver 602 is configured to forward user plane data sent by the user equipment to a core network device.

The transceiver 602 is further configured to send a data feature set to the core network device after transmission of user plane data begins. The data feature set includes an access network identifier corresponding to the user plane data and attribute information of the user plane data.

Further, the transceiver 602 is specifically configured to send a user plane data packet to the core network device. The user plane data packet carries the data feature set.

Further, the transceiver 602 is specifically configured to send control plane signaling to the core network device. The control plane signaling carries the data feature set.

Further, the attribute information of the user plane data includes at least one or more of 5-tuple information of the user plane data, a data volume of the user plane data, and a bearer identifier corresponding to the user plane data.

The memory 601 may be a read-only memory (read-only memory, ROM) or another type of static storage device that can store static information and a static instruction; or a random access memory (random access memory, RAM) or another type of dynamic storage device that can store information and an instruction; or may be an electrically erasable programmable read-only memory (Electrically Erasable Programmable Read-Only Memory, EEPROM), a compact disc read-only memory (Compact Disc Read-Only Memory, CD-ROM) or another compact disc storage medium, an optical disc storage medium (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that is accessible to a computer, but is not limited thereto. The memory may exist independently, and is connected to the processor by using the communications bus. The memory may alternatively be integrated in the processor.

The transceiver 602 may be a transmitter, a receiver, or a combination thereof, and receives a data packet from another network node or sends a data packet to another network node.

The processor 603 may be a general-purpose central processing unit (CPU), a microprocessor, an application-specific integrated circuit (application-specific integrated circuit, ASIC), or one or more integrated circuits configured to control execution of a program of the solution of the present invention.

The communications bus 604 may include a path, and transfer information between the foregoing components. The communications interface 605 may be any transceiver, configured to communicate with another device or a communications network such as Ethernet, a radio access network (RAN), or a wireless local area network (Wireless Local Area Network, WLAN).

The memory 601 is configured to store application program code for executing the solution of the present invention, and the processor 603 controls execution.

During specific implementation, in an embodiment, the processor 603 may include one or more CPUs, for example, a CPU 0 and a CPU 1 in FIG. 8.

During specific implementation, in an embodiment, the apparatus for distinguishing an access network may include a plurality of processors, for example, a processor 603 and a processor 608 in FIG. 8. Each of the processors may be a single-core (single-CPU) processor or a multi-core (multi-CPU) processor. The processor herein may be one or more devices, circuits, and/or processing cores configured to process data (such as a computer program instruction).

During specific implementation, in an embodiment, the apparatus for distinguishing an access network may further include an output device 606 and an input device 607. The output device 606 communicates with the processor 603, and may display information in a plurality of manners. For example, the output device 606 may be a liquid crystal display (liquid crystal display, LCD), a light emitting diode (light emitting diode, LED) display device, a cathode ray tube (cathode ray tube, CRT) display device, a projector (projector), or the like. The input device 607 communicates with the processor 603, and may receive an input by a user in a plurality of manners. For example, the input device 607 may be a mouse, a keyboard, a touchscreen device, a sensing device, or the like.

The apparatus for distinguishing an access network provided in the present invention is applied to the base station, and the base station is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, after transmission of the user plane data begins, the base station sends the data feature set to the core network device. The data feature set carries the access network identifier corresponding to the user plane data and the attribute information of the user plane data. In this case, the core network device can determine, based on the data feature set, an access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

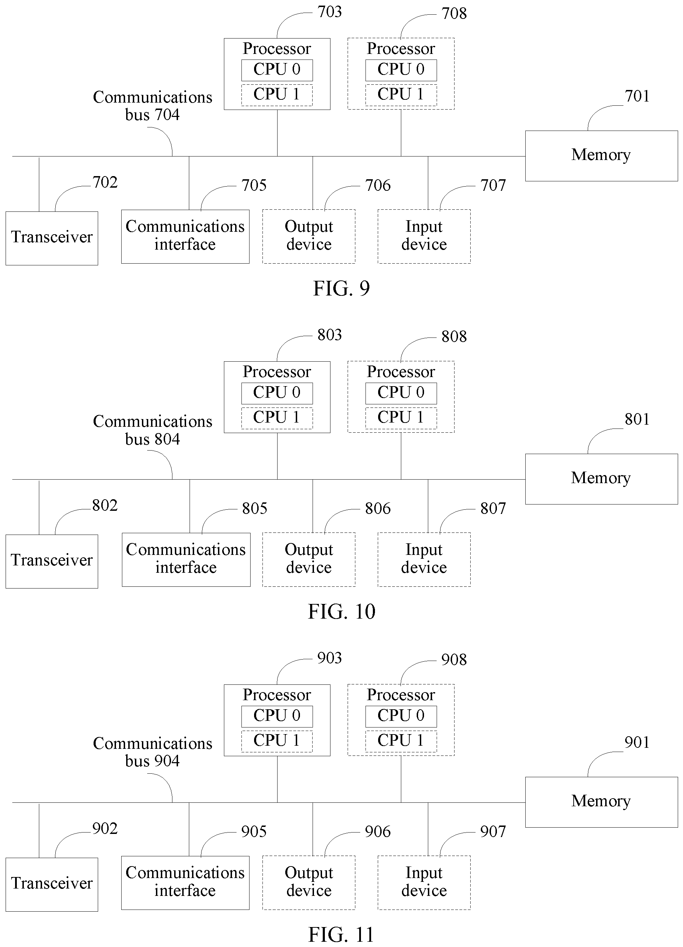

As shown in FIG. 9, an embodiment of the present invention further provides an apparatus for distinguishing an access network. The apparatus is applied to a core network device, and the core network device is applied to a multi-access network architecture. In the multi-access network architecture, user equipment accesses a base station by using at least a first access network and a second access network. The apparatus includes a memory 701, a transceiver 702, a processor 703, a communications bus 704, and at least one communications interface 705. The memory 701, the transceiver 702, the processor 703, and the at least one communications interface 705 are connected to each other by using the communications bus 704.

The transceiver 702 is configured to receive a data feature set sent by the base station. The data feature set includes an access network identifier corresponding to transmitted user plane data and attribute information of the user plane data.

The processor 703 is configured to determine, based on the access network identifier corresponding to the user plane data and the attribute information of the user plane data in the data feature set, an access network used to transmit the user plane data.

The memory 701 may be a read-only memory (read-only memory, ROM) or another type of static storage device that can store static information and a static instruction; or a random access memory (random access memory, RAM) or another type of dynamic storage device that can store information and an instruction; or may be an electrically erasable programmable read-only memory (Electrically Erasable Programmable Read-Only Memory, EEPROM), a compact disc read-only memory (Compact Disc Read-Only Memory, CD-ROM) or another compact disc storage medium, an optical disc storage medium (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that is accessible to a computer, but is not limited thereto. The memory may exist independently, and is connected to the processor by using the communications bus. The memory may alternatively be integrated in the processor.

The transceiver 702 may be a transmitter, a receiver, or a combination thereof, and receives a data packet from another network node or sends a data packet to another network node.

The processor 703 may be a general-purpose central processing unit (CPU), a microprocessor, an application-specific integrated circuit (application-specific integrated circuit, ASIC), or one or more integrated circuits configured to control execution of a program of the solution of the present invention.

The communications bus 704 may include a path, and transfer information between the foregoing components. The communications interface 705 may be any transceiver, configured to communicate with another device or a communications network such as Ethernet, a radio access network (RAN), or a wireless local area network (Wireless Local Area Network, WLAN).

The memory 701 is configured to store application program code for executing the solution of the present invention, and the processor 703 controls execution.

During specific implementation, in an embodiment, the processor 703 may include one or more CPUs, for example, a CPU 0 and a CPU 1 in FIG. 9.

During specific implementation, in an embodiment, the apparatus for distinguishing an access network may include a plurality of processors, for example, a processor 703 and a processor 708 in FIG. 9. Each of the processors may be a single-core (single-CPU) processor or a multi-core (multi-CPU) processor. The processor herein may be one or more devices, circuits, and/or processing cores configured to process data (such as a computer program instruction).

During specific implementation, in an embodiment, the apparatus for distinguishing an access network may further include an output device 706 and an input device 707. The output device 706 communicates with the processor 703, and may display information in a plurality of manners. For example, the output device 706 may be a liquid crystal display (liquid crystal display, LCD), a light emitting diode (light emitting diode, LED) display device, a cathode ray tube (cathode ray tube, CRT) display device, a projector (projector), or the like. The input device 707 communicates with the processor 703, and may receive an input by a user in a plurality of manners. For example, the input device 707 may be a mouse, a keyboard, a touchscreen device, a sensing device, or the like.

The apparatus for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, the core network device can determine, based on the access network identifier and the attribute information of the user plane data carried in the data feature set, the access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

As shown in FIG. 10, an embodiment of the present invention further provides an apparatus for distinguishing an access network. The apparatus is applied to a base station, and the base station is applied to a multi-access network architecture. In the multi-access network architecture, user equipment accesses the base station by using at least a first access network and a second access network. The apparatus includes a memory 801, a transceiver 802, a processor 803, a communications bus 804, and at least one communications interface 805. The memory 801, the transceiver 802, the processor 803, and the at least one communications interface 805 are connected to each other by using the bus communications 804.

The transceiver 802 is configured to send a data feature set to a core network device before user plane data is transmitted. The data feature set includes a routing rule of the to-be-transmitted user plane data, and the routing rule includes an identifier of each access network and user plane data attribute information corresponding to the access network.

Optionally, the transceiver 802 is specifically configured to send control plane signaling to the core network device. The control plane signaling carries the data feature set.

Further, the user plane data attribute information includes any one or more of 5-tuple information and bearer information of the user plane data.

The memory 801 may be a read-only memory (read-only memory, ROM) or another type of static storage device that can store static information and a static instruction; or a random access memory (random access memory, RAM) or another type of dynamic storage device that can store information and an instruction; or may be an electrically erasable programmable read-only memory (Electrically Erasable Programmable Read-Only Memory, EEPROM), a compact disc read-only memory (Compact Disc Read-Only Memory, CD-ROM) or another compact disc storage medium, an optical disc storage medium (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that is accessible to a computer, but is not limited thereto. The memory may exist independently, and is connected to the processor by using the communications bus. The memory may alternatively be integrated in the processor.

The transceiver 802 may be a transmitter, a receiver, or a combination thereof, and receives a data packet from another network node or sends a data packet to another network node.

The processor 803 may be a general-purpose central processing unit (CPU), a microprocessor, an application-specific integrated circuit (application-specific integrated circuit, ASIC), or one or more integrated circuits configured to control execution of a program of the solution of the present invention.

The communications bus 804 may include a path, and transfer information between the foregoing components. The communications interface 805 may be any transceiver, configured to communicate with another device or a communications network such as Ethernet, a radio access network (RAN), or a wireless local area network (Wireless Local Area Network, WLAN).

The memory 801 is configured to store application program code for executing the solution of the present invention, and the processor 803 controls execution.

During specific implementation, in an embodiment, the processor 803 may include one or more CPUs, for example, a CPU 0 and a CPU 1 in FIG. 10.

During specific implementation, in an embodiment, the apparatus for distinguishing an access network may include a plurality of processors, for example, a processor 803 and a processor 808 in FIG. 10. Each of the processors may be a single-core (single-CPU) processor or a multi-core (multi-CPU) processor. The processor herein may be one or more devices, circuits, and/or processing cores configured to process data (such as a computer program instruction).

During specific implementation, in an embodiment, the apparatus for distinguishing an access network may further include an output device 806 and an input device 807. The output device 806 communicates with the processor 803, and may display information in a plurality of manners. For example, the output device 806 may be a liquid crystal display (liquid crystal display, LCD), a light emitting diode (light emitting diode, LED) display device, a cathode ray tube (cathode ray tube, CRT) display device, a projector (projector), or the like. The input device 807 communicates with the processor 803, and may receive an input by a user in a plurality of manners. For example, the input device 807 may be a mouse, a keyboard, a touchscreen device, a sensing device, or the like.

The apparatus for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, before the user plane data is transmitted, the base station first sends the data feature set to the core network device. The data feature set carries the routing rule of the user plane data. In this case, when receiving the user plane data, the core network device can determine, based on the routing rule in the data feature set, an access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

As shown in FIG. 11, an embodiment of the present invention further provides an apparatus for distinguishing an access network. The apparatus is applied to a core network device, and the core network device is applied to a multi-access network architecture. In the multi-access network architecture, user equipment accesses the base station by using at least a first access network and a second access network. The apparatus includes a memory 901, a transceiver 902, a processor 903, a communications bus 904, and at least one communications interface 905. The memory 901, the transceiver 902, the processor 903, and the at least one communications interface 905 are connected to each other by using the communications bus 904.

The transceiver 902 is configured to receive a data feature set sent by the base station. The data feature set includes a routing rule of to-be-transmitted user plane data, and the routing rule includes an identifier of each access network and user plane data attribute information corresponding to the access network. The transceiver 902 is further configured to receive user plane data sent by the base station.

The processor 903 is configured to: when the user plane data sent by the base station is received, determine, based on the data feature set, an access network used to transmit the user plane data.

The memory 901 may be a read-only memory (read-only memory, ROM) or another type of static storage device that can store static information and a static instruction; or a random access memory (random access memory, RAM) or another type of dynamic storage device that can store information and an instruction; or may be an electrically erasable programmable read-only memory (Electrically Erasable Programmable Read-Only Memory, EEPROM), a compact disc read-only memory (Compact Disc Read-Only Memory, CD-ROM) or another compact disc storage medium, an optical disc storage medium (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that is accessible to a computer, but is not limited thereto. The memory may exist independently, and is connected to the processor by using the communications bus. The memory may alternatively be integrated in the processor.

The transceiver 902 may be a transmitter, a receiver, or a combination thereof, and receives a data packet from another network node or sends a data packet to another network node.

The processor 903 may be a general-purpose central processing unit (CPU), a microprocessor, an application-specific integrated circuit (application-specific integrated circuit, ASIC), or one or more integrated circuits configured to control execution of a program of the solution of the present invention.

The communications bus 904 may include a path, and transfer information between the foregoing components. The communications interface 905 may be any transceiver, configured to communicate with another device or a communications network such as Ethernet, a radio access network (RAN), or a wireless local area network (Wireless Local Area Network, WLAN).

The memory 901 is configured to store application program code for executing the solution of the present invention, and the processor 903 controls execution.

During specific implementation, in an embodiment, the processor 903 may include one or more CPUs, for example, a CPU 0 and a CPU 1 in FIG. 11.

During specific implementation, in an embodiment, the apparatus for distinguishing an access network may include a plurality of processors, for example, a processor 903 and a processor 908 in FIG. 11. Each of the processors may be a single-core (single-CPU) processor or a multi-core (multi-CPU) processor. The processor herein may be one or more devices, circuits, and/or processing cores configured to process data (such as a computer program instruction).

During specific implementation, in an embodiment, the apparatus for distinguishing an access network may further include an output device 906 and an input device 907. The output device 906 communicates with the processor 903, and may display information in a plurality of manners. For example, the output device 906 may be a liquid crystal display (liquid crystal display, LCD), a light emitting diode (light emitting diode, LED) display device, a cathode ray tube (cathode ray tube, CRT) display device, a projector (projector), or the like. The input device 907 communicates with the processor 903, and may receive an input by a user in a plurality of manners. For example, the input device 907 may be a mouse, a keyboard, a touchscreen device, a sensing device, or the like.

The apparatus for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby performing adjustment in real time based on the data transmission status of the access network side. In addition, under the network architecture, when receiving user plane data from the user equipment, the core network device can determine, based on the routing rule carried in the received data feature set, the access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

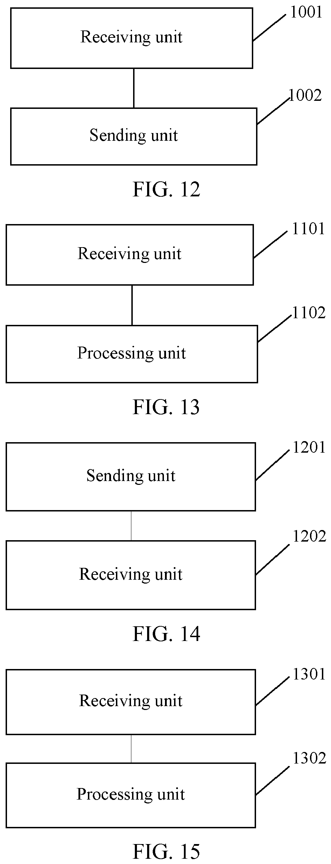

As shown in FIG. 12, an embodiment of the present invention further provides an apparatus for distinguishing an access network. The apparatus is applied to a base station, and the base station is applied to a multi-access network architecture. In the multi-access network architecture, user equipment accesses the base station by using at least a first access network and a second access network. The apparatus includes the following units:
A receiving unit 1001 is configured to receive user plane data sent by the user equipment.

A sending unit 1002 is configured to send the user plane data to a core network device.

The sending unit 1002 is further configured to send a data feature set to the core network device after transmission of the user plane data begins. The data feature set includes an access network identifier corresponding to the user plane data and attribute information of the user plane data.

The receiving unit 1001 and the sending unit 1002 may both be physical devices or virtual modules. During actual application, functions of the receiving unit 1001 and the sending unit 1002 may be implemented by using the transceiver 602. Refer to step 101 in the method embodiment for specific implementation of this process, and details are not described herein again.

Optionally, the sending unit 1002 is specifically configured to send a user plane data packet to the core network device. The user plane data packet carries the data feature set.

Optionally, the sending unit 1002 is specifically configured to send control plane signaling to the core network device. The control plane signaling carries the data feature set.

For a specific implementation process of sending the data feature set by the sending unit to the core network device, refer to some embodiments of the method, and details are not described herein again.

Further, the attribute information of the user plane data includes at least one or more of 5-tuple information of the user plane data, a data volume of the user plane data, and a bearer identifier corresponding to the user plane data.

The apparatus for distinguishing an access network provided in the present invention is applied to the base station, and the base station is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, after transmission of the user plane data begins, the base station sends the data feature set to the core network device. The data feature set carries the access network identifier corresponding to the user plane data and the attribute information of the user plane data. In this case, the core network device can determine, based on the data feature set, an access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

As shown in FIG. 13, an embodiment of the present invention provides an apparatus for distinguishing an access network. The apparatus is applied to a core network device, and the core network device is applied to a multi-access network architecture. In the multi-access network architecture, user equipment accesses the base station by using at least a first access network and a second access network. The apparatus includes:
a receiving unit 1101, configured to receive a data feature set sent by the base station, where the data feature set includes an access network identifier corresponding to transmitted user plane data and attribute information of the user plane data; and
a processing unit 1102, configured to determine, based on the access network identifier corresponding to the user plane data and the attribute information of the user plane data in the data feature set, an access network used to transmit the user plane data.

The receiving unit 1101 and the processing unit 1102 may be physical devices or virtual modules. During actual application, a function of the receiving unit 1101 may be implemented by using the transceiver 702, and a function of the processing unit 1102 may be implemented by using the processor 703. Refer to step 102 in the method embodiment for specific implementation of this process, and details are not described herein again.

The apparatus for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, the core network device can determine, based on the access network identifier and the attribute information of the user plane data carried in the data feature set, the access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

As shown in FIG. 14, an embodiment of the present invention provides an apparatus for distinguishing an access network. The apparatus is applied to a base station, and the base station is applied to a multi-access network architecture. In the multi-access network architecture, user equipment accesses the base station by using at least a first access network and a second access network. The apparatus includes the following units:
A sending unit 1201 is configured to send a data feature set to a core network device before user plane data is transmitted. The data feature set includes a routing rule of the to-be-transmitted user plane data, and the routing rule includes an identifier of each access network and user plane data attribute information corresponding to the access network.

A receiving unit 1202 is configured to receive user plane data sent by the user equipment.

The transceiver 1201 is further configured to forward the user plane data sent by the user equipment to the core network device.

The sending unit 1201 and the receiving unit 1202 may be physical devices or virtual modules. During actual application, functions of the sending unit 1201 and the receiving unit 1202 may be implemented by using the transceiver 802. Refer to step 401 in the method embodiment for specific implementation of this process, and details are not described herein again.

Optionally, the sending unit 1201 is specifically configured to send control plane signaling to the core network device. The control plane signaling carries the data feature set.

Further, the user plane data attribute information includes any one or more of 5-tuple information and bearer information of the user plane data.

The apparatus for distinguishing an access network provided in the present invention is applied to the base station, and the base station is applied to the multi-access network architecture. In the network architecture, data transmitted by the user equipment by using a plurality of access networks is converged in the base station, so that the base station can obtain a data transmission status of an access network side in real time, thereby adjusting, based on the data transmission status of the access network side in real time, an access network used to transmit data. In addition, under the network architecture, after transmission of the user plane data begins, the base station sends the data feature set to the core network device. The data feature set carries the access network identifier corresponding to the user plane data and the attribute information of the user plane data. In this case, the core network device can determine, based on the data feature set, an access network used to transmit the user plane data, thereby being capable of distinguishing different access networks. In conclusion, based on the apparatus for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

As shown in FIG. 15, an embodiment of the present invention provides an apparatus for distinguishing an access network. The apparatus is applied to a core network device, and the core network device is applied to a multi-access network architecture. In the multi-access network architecture, user equipment accesses the base station by using at least a first access network and a second access network. The apparatus includes:
a receiving unit 1301, configured to receive a data feature set sent by the base station, where the data feature set includes a routing rule of to-be-transmitted user plane data, and the routing rule includes an identifier of each access network and user plane data attribute information corresponding to the access network; and
a processing unit 1302, configured to: when the user plane data sent by the base station is received, determine, based on the data feature set, an access network used to transmit the user plane data.

The receiving unit 1301 and the processing unit 1302 may be physical devices or virtual modules. During actual application, a function of the receiving unit 1301 may be implemented by using the transceiver 902, and a function of the processing unit 1302 may be implemented by using the processor 903.

The apparatus for distinguishing an access network provided in the present invention is applied to the multi-access network architecture. In the network architecture, data transmitted by the user equipment by using a plurality of access networks is converged in the base station, so that the base station can obtain a data transmission status of an access network side in real time, thereby performing adjustment in real time based on the data transmission status of the access network side. In addition, under the network architecture, when receiving user plane data from the user equipment, the core network device can determine, based on the routing rule carried in the received data feature set, the access network used to transmit the user plane data, thereby being capable of distinguishing different access networks. In conclusion, based on the method for distinguishing an access network provided in the present invention, after the core network device distinguishes the different access networks, the base station can sense the data transmission status of the access network side in real time, to flexibly adjust, based on the data transmission status of the access network side, an access network that is used by a user to transmit data.

An embodiment of the present invention further provides a nonvolatile computer readable storage medium storing one or more programs. The one or more programs include an instruction, and when the instruction is executed by a base station, the base station is caused to perform the following event:
sending, by the base station, a data feature set to a core network device after transmission of user plane data begins, where the data feature set includes an access network identifier corresponding to the user plane data and attribute information of the user plane data.

An embodiment of the present invention further provides a nonvolatile computer readable storage medium storing one or more programs. The one or more programs include an instruction, and when the instruction is executed by a core network device, the core network device is caused to perform the following events:
receiving, by the core network device, a data feature set sent by a base station, where the data feature set includes an access network identifier corresponding to transmitted user plane data and attribute information of the user plane data; and
determining, based on the access network identifier corresponding to the user plane data and the attribute information of the user plane data in the data feature set, an access network used to transmit the user plane data.

An embodiment of the present invention further provides a nonvolatile computer readable storage medium storing one or more programs. The one or more programs include an instruction, and when the instruction is executed by a base station, the base station is caused to perform the following event:
sending, by the base station, a data feature set to a core network device before user plane data is transmitted, where the data feature set includes a routing rule of the to-be-transmitted user plane data, and the routing rule includes an identifier of each access network and user plane data attribute information corresponding to the access network.

An embodiment of the present invention further provides a nonvolatile computer readable storage medium storing one or more programs. The one or more programs include an instruction, and when the instruction is executed by a core network device, the core network device is caused to perform the following events:
receiving, by a core network device, a data feature set sent by the base station, where the data feature set includes a routing rule of to-be-transmitted user plane data, and the routing rule includes an identifier of each access network and user plane data attribute information corresponding to the access network; and
when receiving the user plane data sent by the base station, determining, based on the data feature set, an access network used to transmit the user plane data.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for distinguishing an access network, wherein the method is applied to a multi-access network architecture, and in the multi-access network architecture, user equipment accesses a base station by using at least a first access network and a second access network; and the method comprises:
sending, by the base station, a data feature set to a core network device after transmission of user plane data begins, wherein the data feature set comprises an access network identifier corresponding to the user plane data and attribute information of the user plane data.

2. The method according to claim 1, wherein the sending, by the base station, a data feature set to a core network device specifically comprises:
sending, by the base station, a user plane data packet to the core network device, wherein the user plane data packet carries the data feature set.

3. The method according to claim 1, wherein the sending, by the base station, a data feature set to a core network device specifically comprises:
sending, by the base station, control plane signaling to the core network device, wherein the control plane signaling carries the data feature set.

4. The method according to any one of claims 1 to 3, wherein the attribute information of the user plane data comprises any one or more of 5-tuple information of the user plane data, a data volume of the user plane data, and a bearer identifier corresponding to the user plane data.

5. A method for distinguishing an access network, wherein the method is applied to a multi-access network architecture, and in the multi-access network architecture, user equipment accesses a base station by using at least a first access network and a second access network; and the method comprises:
receiving, by a core network device, a data feature set sent by the base station, wherein the data feature set comprises an access network identifier corresponding to transmitted user plane data and attribute information of the user plane data; and
determining, based on the access network identifier corresponding to the user plane data and the attribute information of the user plane data in the data feature set, an access network used to transmit the user plane data.

6. The method according to claim 5, wherein the core network device is a gateway or a mobile edge computing device MEC.

7. A method for distinguishing an access network, wherein the method is applied to a multi-access network architecture, and in the multi-access network architecture, user equipment accesses a base station by using at least a first access network and a second access network; and the method comprises:
sending, by the base station, a data feature set to a core network device before user plane data is transmitted, wherein the data feature set comprises a routing rule of the to-be-transmitted user plane data, and the routing rule comprises an identifier of each access network and user plane data attribute information corresponding to the access network.

8. The method according to claim 7, wherein the sending, by the base station, a data feature set to a core network device specifically comprises:
sending, by the base station, control plane signaling to the core network device, wherein the control plane signaling carries the data feature set.

9. The method according to claim 7 or 8, wherein the method further comprises:
if the routing rule is updated, sending, by the base station, a data feature set to the core network device, wherein the data feature set comprises the updated routing rule.

10. The method according to any one of claims 7 to 9, wherein the user plane data attribute information comprises any one or more of 5-tuple information and bearer information of the user plane data.

11. A method for distinguishing an access network, wherein the method is applied to a multi-access network architecture, and in the multi-access network architecture, user equipment accesses a base station by using at least a first access network and a second access network; and the method comprises:
receiving, by a core network device, a data feature set sent by the base station, wherein the data feature set comprises a routing rule of to-be-transmitted user plane data, and the routing rule comprises an identifier of each access network and user plane data attribute information corresponding to the access network; and
when receiving the user plane data sent by the base station, determining, based on the data feature set, an access network used to transmit the user plane data.

12. The method according to claim 11, wherein the core network device is a gateway or a mobile edge computing device MEC.

13. An apparatus for distinguishing an access network, wherein the apparatus is applied to a base station, the base station is applied to a multi-access network architecture, and in the multi-access network architecture, user equipment accesses the base station by using at least a first access network and a second access network; and the apparatus comprises: a memory, configured to store computer executable program code; a transceiver, and a processor coupled to the memory and the transceiver, wherein
the transceiver is configured to forward user plane data sent by the user equipment to a core network device; and
the transceiver is further configured to send a data feature set to the core network device after transmission of user plane data begins, wherein the data feature set comprises an access network identifier corresponding to the user plane data and attribute information of the user plane data.

14. The apparatus according to claim 13, wherein the transceiver is specifically configured to send a user plane data packet to the core network device, and the user plane data packet carries the data feature set.

15. The apparatus according to claim 13, wherein the transceiver is specifically configured to send control plane signaling to the core network device, and the control plane signaling carries the data feature set.

16. The apparatus according to any one of claims 13 to 15, wherein the attribute information of the user plane data comprises any one or more of 5-tuple information of the user plane data, a data volume of the user plane data, and a bearer identifier corresponding to the user plane data.

17. An apparatus for distinguishing an access network, wherein the apparatus is applied to a core network device, the core network device is applied to a multi-access network architecture, and in the multi-access network architecture, user equipment accesses a base station by using at least a first access network and a second access network; and the apparatus comprises: a memory, configured to store computer executable program code; a transceiver, and a processor coupled to the memory and the transceiver, wherein
the transceiver is configured to receive a data feature set sent by the base station, wherein the data feature set comprises an access network identifier corresponding to transmitted user plane data and attribute information of the user plane data; and
the processor is configured to determine, based on the access network identifier corresponding to the user plane data and the attribute information of the user plane data in the data feature set, an access network used to transmit the user plane data.

18. The apparatus according to claim 17, wherein the core network device is a gateway or a mobile edge computing device MEC.

19. An apparatus for distinguishing an access network, wherein the apparatus is applied to a base station, the base station is applied to a multi-access network architecture, and in the multi-access network architecture, user equipment accesses the base station by using at least a first access network and a second access network; and the apparatus comprises: a memory, configured to store computer executable program code; a transceiver, and a processor coupled to the memory and the transceiver, wherein
the transceiver is configured to send a data feature set to a core network device before user plane data is transmitted, wherein the data feature set comprises a routing rule of the to-be-transmitted user plane data, and the routing rule comprises an identifier of each access network and user plane data attribute information corresponding to the access network.

20. The apparatus according to claim 19, wherein the transceiver is specifically configured to send control plane signaling to the core network device, and the control plane signaling carries the data feature set.

21. The apparatus according to claim 19 or 20, wherein the transceiver is further configured to: when the routing rule is updated, send a data feature set to the core network device, and the data feature set comprises the updated routing rule.

22. The apparatus according to any one of claims 19 to 21, wherein the user plane data attribute information comprises any one or more of 5-tuple information and bearer information of the user plane data.

23. An apparatus for distinguishing an access network, wherein the apparatus is applied to a core network device, the core network device is applied to a multi-access network architecture, and in the multi-access network architecture, user equipment accesses a base station by using at least a first access network and a second access network; and the apparatus comprises: a memory, configured to store computer executable program code; a transceiver, and a processor coupled to the memory and the transceiver, wherein
the transceiver is configured to receive a data feature set sent by the base station, wherein the data feature set comprises a routing rule of to-be-transmitted user plane data, and the routing rule comprises an identifier of each access network and user plane data attribute information corresponding to the access network; and is further configured to receive user plane data sent by the base station; and
the processor is configured to: when the user plane data sent by the base station is received, determine, based on the data feature set, an access network used to transmit the user plane data.

24. The apparatus according to claim 23, wherein the core network device is a gateway or a mobile edge computing device MEC.

25. An apparatus for distinguishing an access network, wherein the apparatus is applied to a base station, the base station is applied to a multi-access network architecture, and in the multi-access network architecture, user equipment accesses the base station by using at least a first access network and a second access network; and the apparatus comprises:
a receiving unit, configured to receive user plane data sent by the user equipment; and
a sending unit, configured to send the user plane data to a core network device, wherein
the sending unit is further configured to send a data feature set to the core network device after transmission of the user plane data begins, wherein the data feature set comprises an access network identifier corresponding to the user plane data and attribute information of the user plane data.

26. The apparatus according to claim 25, wherein the sending unit is specifically configured to send a user plane data packet to the core network device, and the user plane data packet carries the data feature set.

27. The apparatus according to claim 25, wherein the sending unit is specifically configured to send control plane signaling to the core network device, and the control plane signaling carries the data feature set.

28. The apparatus according to any one of claims 25 to 27, wherein the attribute information of the user plane data comprises any one or more of 5-tuple information of the user plane data, a data volume of the user plane data, and a bearer identifier corresponding to the user plane data.

29. An apparatus for distinguishing an access network, wherein the apparatus is applied to a core network device, the core network device is applied to a multi-access network architecture, and in the multi-access network architecture, user equipment accesses a base station by using at least a first access network and a second access network; and the apparatus comprises:
a receiving unit, configured to receive a data feature set sent by the base station, wherein the data feature set comprises an access network identifier corresponding to transmitted user plane data and attribute information of the user plane data; and
a processing unit, configured to determine, based on the access network identifier corresponding to the user plane data and the attribute information of the user plane data in the data feature set, an access network used to transmit the user plane data.

30. The apparatus according to claim 29, wherein the core network device is a gateway or a mobile edge computing device MEC.

31. An apparatus for distinguishing an access network, wherein the apparatus is applied to a base station, the base station is applied to a multi-access network architecture, and in the multi-access network architecture, user equipment accesses the base station by using at least a first access network and a second access network; and the apparatus comprises:
a sending unit, configured to send a data feature set to a core network device before user plane data is transmitted, wherein the data feature set comprises a routing rule of the to-be-transmitted user plane data, and the routing rule comprises an identifier of each access network and user plane data attribute information corresponding to the access network.

32. The apparatus according to claim 31, wherein the sending unit is specifically configured to send control plane signaling to the core network device, and the control plane signaling carries the data feature set.

33. The apparatus according to claim 31 or 32, wherein the sending unit is further configured to: when the routing rule is updated, send a data feature set to the core network device, and the data feature set comprises the updated routing rule.

34. The apparatus according to any one of claims 31 to 33, wherein the user plane data attribute information comprises any one or more of 5-tuple information and bearer information of the user plane data.

35. An apparatus for distinguishing an access network, wherein the apparatus is applied to a core network device, the core network device is applied to a multi-access network architecture, and in the multi-access network architecture, user equipment accesses a base station by using at least a first access network and a second access network; and the apparatus comprises:
a receiving unit, configured to receive a data feature set sent by the base station, wherein the data feature set comprises a routing rule of to-be-transmitted user plane data, and the routing rule comprises an identifier of each access network and user plane data attribute information corresponding to the access network; and
a processing unit, configured to: when the user plane data sent by the base station is received, determine, based on the data feature set, an access network used to transmit the user plane data.

36. The apparatus according to claim 35, wherein the core network device is a gateway or a mobile edge computing device MEC.

37. A nonvolatile computer readable storage medium storing one or more programs, wherein the one or more programs comprise an instruction, and when the instruction is executed by a base station, the base station is caused to perform the following events:
sending, by the base station, a data feature set to a core network device after transmission of user plane data begins, wherein the data feature set comprises an access network identifier corresponding to the user plane data and attribute information of the user plane data.

38. A nonvolatile computer readable storage medium storing one or more programs, wherein the one or more programs comprise an instruction, and when the instruction is executed by a core network device, the core network device is caused to perform the following events:
receiving, by the core network device, a data feature set sent by a base station, wherein the data feature set comprises an access network identifier corresponding to transmitted user plane data and attribute information of the user plane data; and
determining, based on the access network identifier corresponding to the user plane data and the attribute information of the user plane data in the data feature set, an access network used to transmit the user plane data.

39. A nonvolatile computer readable storage medium storing one or more programs, wherein the one or more programs comprise an instruction, and when the instruction is executed by a base station, the base station is caused to perform the following events:
sending, by the base station, a data feature set to a core network device before user plane data is transmitted, wherein the data feature set comprises a routing rule of the to-be-transmitted user plane data, and the routing rule comprises an identifier of each access network and user plane data attribute information corresponding to the access network.

40. A nonvolatile computer readable storage medium storing one or more programs, wherein the one or more programs comprise an instruction, and when the instruction is executed by a core network device, the core network device is caused to perform the following events:
receiving, by the core network device, a data feature set sent by a base station, wherein the data feature set comprises a routing rule of to-be-transmitted user plane data, and the routing rule comprises an identifier of each access network and user plane data attribute information corresponding to the access network; and
when receiving the user plane data sent by the base station, determining, based on the data feature set, an access network used to transmit the user plane data.
